# FASCICULE DE BREVET EUROPEEN

(11) **EP 0 545 767 B1**
(45) Date de publication et mention de la délivrance du brevet: **03.05.1995**
(21) Numéro de dépôt: 92403140.4
(22) Date de dépôt: 20.11.1992
(51) Int. Cl.: G21C 9/016

(54) **Réacteur nucléaire comportant un dispositif de récupération et de refroidissement du coeur du réacteur en fusion à la suite d'un accident**
Kernreaktor mit einer Vorrichtung zum Auffangen und Kühlen von geschmolzenen Spaltzonenmassen als Folge eines Unfalles
Nuclear reactor comprising a device for catching and cooling a molten core caused by an accident

(30) Priorité: 04.12.1991 FR 9115028
(43) Date de publication de la demande: 09.06.1993
(73) Titulaire: FRAMATOME, 92400 Courbevoie (FR)
(72) Inventeur: Jude, Patrice, F-95640 Brignancourt (FR)
(74) Mandataire: Bouget, Lucien

(56) Documents cités:
- EP-A- 0 105 800
- EP-A- 0 392 604
- WO-A-90/10936
- FR-A- 2 241 850

## Description

L'invention concerne un réacteur nucléaire comportant un dispositif de récupération et de refroidissement du coeur du réacteur en fusion à la suite d'un accident.

Les réacteurs nucléaires à eau sous pression comportent une cuve de forme générale cylindrique renfermant le coeur du réacteur, disposée avec son axe vertical dans un puits de cuve cylindrique ayant un fond inférieur situé à l'aplomb de la cuve. Le coeur du réacteur nucléaire est refroidi par de l'eau sous pression circulant dans le circuit primaire du réacteur et à l'intérieur de la cuve en contact avec les assemblages combustibles.

Dans le cas de certains accidents survenant dans le réacteur nucléaire et se traduisant par une perte de la fonction de refroidissement du coeur, on doit envisager, compte tenu des conséquences très graves qui en résulteraient, bien que la probabilité d'un tel évènement soit extrêmement faible et pratiquement nulle, le cas où les circuits d'injection de secours du réacteur ne pourraient être mis en fonctionnement. Il peut alors se produire une séquence accidentelle conduisant à la fusion du coeur en l'absence d'eau de refroidissement, ce qui peut entraîner une destruction par percée du fond de la cuve et un écoulement de la masse du coeur en fusion et des matériaux entourant le coeur, dans le puits en béton contenant la cuve du réacteur. Le contact de la masse en fusion du combustible et des matériaux entourant le combustible appelée corium, dont la température peut atteindre 2800 à 3000°C avec le fond du puits de cuve en béton, en l'absence de refroidissement, peut entraîner la destruction complète du fond du puits. Le corium peut alors s'enfoncer dans le radier de l'enceinte de confinement du réacteur, détruire ce radier et contaminer les nappes phréatiques présentes dans le sol du site du réacteur nucléaire. La progression du corium à l'intérieur du sol ne peut s'arrêter que lorsque la puissance résiduelle du corium a décru suffisamment.

On a proposé différents dispositifs pour éviter le contact du corium avec le fond du puits de cuve en béton.

Les dispositifs connus permettent généralement d'étaler la masse du corium sur une certaine surface, pour que la puissance à évacuer par unité de surface soit la plus faible possible et soit compatible avec les possibilités de refroidissement par des fluides. On a par exemple proposé de récupérer et de contenir le corium dans une poche métallique revêtue intérieurement de matériaux réfractaires dont la fusion partielle absorbe de l'énergie, de manière transitoire et permet de disposer d'un intervalle de temps suffisant pour noyer extérieurement la poche métallique dans une masse d'eau afin d'évacuer la puissance résiduelle du corium par ébullition de la masse d'eau.

L'inconvénient de ce dispositif provient du fait que les matériaux réfractaires sont le plus souvent de très mauvais conducteurs de la chaleur, ce qui a pour effet d'augmenter la température d'équilibre du corium qui reste à l'état liquide.

On connaît d'autres dispositifs qui utilisent des soles refroidies en permanence par un circuit d'eau. Un des inconvénients de ces dispositifs est que le circuit de refroidissement peut présenter des défaillances qui sont susceptibles de le rendre au moins partiellement inefficace.

On connaît également du document EP-A- 0 392 604 un dispositif constitué par un empilement de profilés placés horizontalement dans le fond du puits, en-dessous du fond de la cuve, de manière à assurer la dispersion de la masse fondue du corium se déversant dans le puits de cuve en cas d'accident, d'améliorer le refroidissement du corium et de permettre sa solidification.

Les profilés constituant l'empilement ont généralement une section en I ou en H et sont superposés pour constituer des nappes successives dans lesquelles les profilés sont disposés suivant des directions perpendiculaires l'une à l'autre. En outre, les profilés ont une disposition en quinconce si l'on considère les nappes successives dans lesquelles les profilés sont parallèles entre eux. Une telle disposition permet de réaliser un étalement satisfaisant du corium mais ne présente pas une capacité de recueil suffisante pour contenir le corium et pour empêcher qu'il ne vienne en contact avec le fond du puits de cuve. En particulier, il peut se produire, dans certaines zones de l'empilement, des débordements et un écoulement relativement rapide du corium en direction du fond de cuve.

Le but de l'invention est donc de proposer un réacteur nucléaire comportant une cuve de forme cylindrique renfermant le coeur du réacteur, un puits de cuve cylindrique dans lequel la cuve est disposée avec son axe vertical ayant un fond inférieur situé à l'aplomb de la cuve et un dispositif de récupération et de refroidissement du coeur du réacteur en fusion à la suite d'un accident constitué par une structure métallique reposant sur le fond du puits de cuve et immergée dans une masse d'eau remplissant la partie inférieure du puits de cuve, le dispositif de récupération permettant d'éviter tout contact de la masse fondue du coeur avec le fond du puits de cuve et d'assurer un refroidissement efficace et une solidification rapide de la masse fondue tombant dans le puits de cuve en cas d'accident.

Dans ce but, la structure métallique est constituée par :
- une pluralité d'éléments profilés allongés ayant deux faces inclinées et une section transversale en forme de V, placés parallèlement les uns par rapport aux autres avec un certain espacement latéral, suivant au moins deux nappes horizontales superposées, les sections transversales en V des éléments profilés étant évasées vers le haut et les bords externes des faces inclinées des éléments profilés disposés en quinconce suivant les nappes superposées se recouvrant latéralement,
- et des supports sensiblement verticaux sur lesquels sont fixés des éléments profilés.

Afin de bien faire comprendre l'invention, on va maintenant décrire, à titre d'exemple non limitatif, en se référant aux figures jointes en annexe, un mode de réalisation d'un réacteur nucléaire à eau sous pression comportant un dispositif de récupération et de refroidissement de la masse du coeur en fusion, selon l'invention.

La figure 1 est une vue schématique en élévation et en coupe par un plan vertical de la partie inférieure du puits de cuve du réacteur et du dispositif de récupération et de refroidissement du coeur en fusion.

La figure 2 est une vue en perspective de la structure métallique du dispositif de récupération du coeur en fusion représenté sur la figure 1.

La figure 3 est une vue de dessus de la structure métallique représentée sur la figure 2.

La figure 4 est une vue partielle en coupe par un plan vertical de la structure métallique montrant les supports des éléments profilés creux.

La figure 5 est une vue en coupe transversale d'un élément profilé creux de la structure métallique du dispositif de récupération.

La figure 6 est une vue schématique en coupe par un plan vertical de la structure métallique du dispositif de récupération, après un déversement de corium dans le puits de cuve.

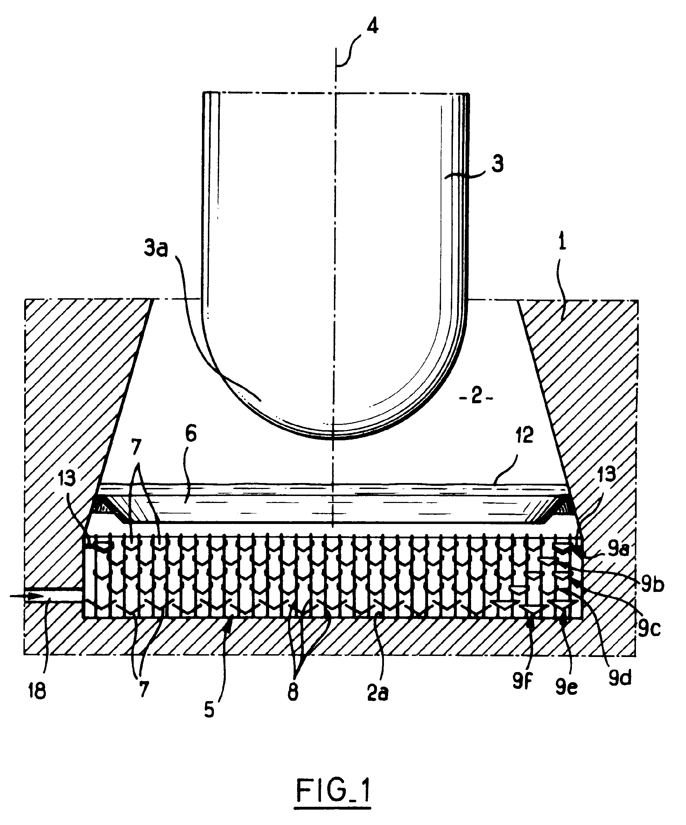

Sur la figure 1, on voit une partie de la structure en béton 1 du réacteur nucléaire délimitant un puits de cuve 2 dans lequel est disposée la cuve 3 du réacteur renfermant le coeur.

La cuve 3 de forme générale cylindrique est disposée avec son axe 4 dans la direction verticale et confondu avec l'axe du puits de cuve 2. La cuve 3 est fermée à sa partie inférieure par un fond bombé 3a de forme hémisphérique.

Le puits de cuve 2 comporte une partie de forme tronconique au niveau du fond de cuve 3a prolongée par une partie cylindrique fermée à son extrémité inférieure par le fond du puits de cuve 2a situé à l'aplomb du fond de cuve 3a.

La structure métallique 5 du dispositif de récupération et de refroidissement du coeur du réacteur, dans le cas d'un accident s'accompagnant d'une fusion de ce coeur, est disposée dans la partie cylindrique inférieure du puits de cuve et repose sur le fond 2a.

De plus, un déflecteur circulaire 6 est disposé autour du puits de cuve, à l'extrémité inférieure de la partie tronconique se raccordant à la partie supérieure de la partie cylindrique dans laquelle est disposée la structure métallique 5.

Le déflecteur 6 est constitué par une tôle fixée sur la surface intérieure du puits de cuve et pliée vers l'intérieur pour constituer un bord déflecteur dirigé vers la structure métallique 5 et destiné à éviter des chutes de corium à la périphérie externe de la structure métallique 5, entre cette structure métallique et la surface intérieure du puits de cuve.

Comme il est visible sur les figures 1, 2 et 3, la structure métallique 5 est constituée par des éléments profilés 7 de forme allongée dont la section visible sur la figure 1 présente la forme d'un V.

Les éléments profilés 7 sont tous parallèles entre eux et sont disposés suivant des nappes successives horizontales superposées dans lesquelles les éléments profilés 7 sont espacés latéralement d'une distance inférieure à la largeur totale d'un profilé 7.

Les éléments profilés 7 de deux nappes successives sont placés en quinconce et, du fait de leur espacement latéral inférieur à la largeur d'un profilé, se recouvrent légèrement suivant leurs bords latéraux, comme il sera expliqué plus loin.

Les éléments profilés 7 disposés horizontalement et dont la section en V est évasée et ouverte vers le haut constituent des gouttières permettant de recueillir le coeur du réacteur et les matériaux de la cuve en fusion entraînés par le coeur, à la suite d'un accident se traduisant par un défaut total de refroidissement du réacteur.

Les éléments profilés 7 sont maintenus par des supports verticaux 8 qui sont constitués par des colonnes creuses qui seront décrites plus loin.

Dans le mode de réalisation représenté sur les figures 1, 2 et 3, la structure métallique 5 comporte six nappes horizontales superposées 9a, 9b, 9c, 9d, 9e et 9f dans lesquelles les éléments profilés 7 sont maintenus par les colonnes tubulaires 8 dans des dispositions parallèles et espacées, comme indiqué ci-dessus.

Sur la figure 1, les repères 9a, ... 9f correspondant aux différentes nappes de la structure métallique 5 désignent le premier élément 7 sur la droite de chacune des nappes.

Les éléments profilés 7 sont obtenus par pliage longitudinal d'une tôle rectangulaire, de manière que l'élément profilé présente deux faces inclinées faisant entre elles un angle voisin de 120°.

Les éléments profilés des deux nappes inférieures 9e et 9f sont réalisés par un simple pliage longitudinal de la tôle et ne comportent que deux faces inclinées alors que les éléments profilés des nappes supérieures 9a, 9b, 9c et 9d présentent de plus deux bords relevés à la verticale à l'extrémité de chacune de leurs faces inclinées.

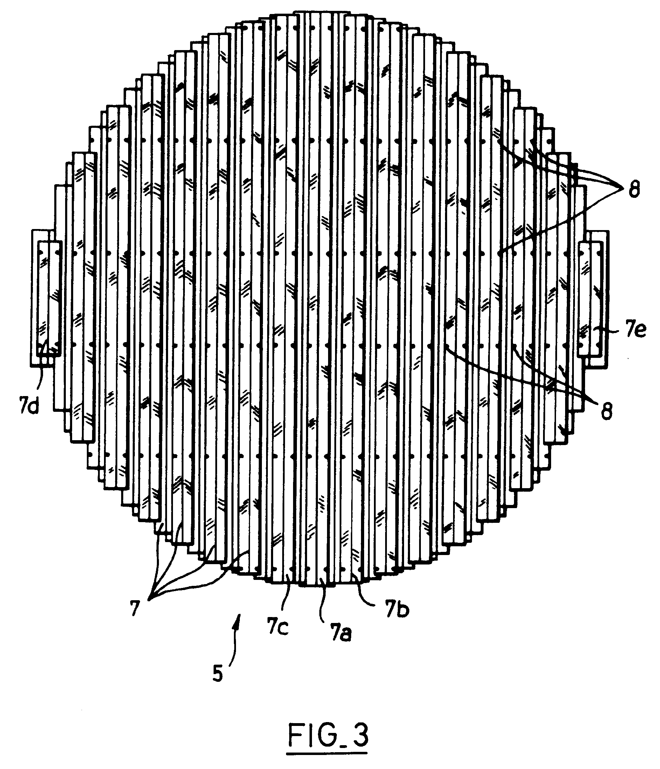

Comme il est visible sur la figure 3, les éléments profilés 7 des différentes nappes successives se recouvrent latéralement, de manière que l'ensemble de la structure 5 constitue une surface de recueil du corium occupant toute la section du puits de cuve.

Les éléments profilés 7 présentent des longueurs décroissantes depuis la partie centrale de la structure 5, vers les extrémités latérales de cette structure.

Les faces inclinées des éléments 7 sont percées d'ouvertures permettant le passage des colonnes de maintien 8 qui sont soudées sur les éléments métalliques au niveau des ouvertures de traversée.

Les éléments métalliques tels que 7a, 7b, 7c disposés au voisinage du centre de la structure 5 comportent quatre jeux de deux ouvertures réparties suivant leur longueur permettant chacun le passage de deux colonnes de maintien 8.

Les éléments de plus faible longueur tels que les éléments 7d et 7e situés au voisinage des extrémités latérales de la structure ne comportent que deux jeux de deux ouvertures permettant chacun le passage et la fixation de deux colonnes de maintien.

De manière générale, les colonnes 8 sont disposées suivant six rangées de longueurs inégales dans des directions perpendiculaires aux éléments profilés 7.

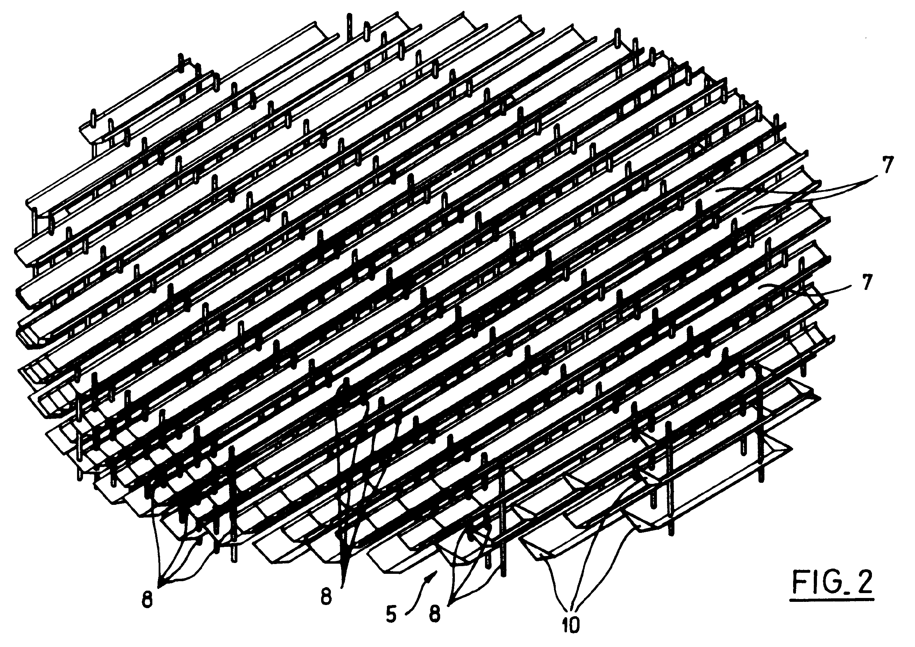

Les éléments profilés 7 en forme de gouttière sont fermés à leurs extrémités par des parois de forme triangulaire 10 dont certaines ont été représentées sur les figures 1 et 2.

Du fait de la disposition en quinconce des éléments profilés 7 des nappes successives superposées et du recouvrement latéral des bords de ces éléments profilés, chacune des colonnes 8 traverse les faces inclinées d'une série d'éléments profilés superposés appartenant à chacune des six nappes horizontales 9a à 9f successives. De cette manière, on assure l'assemblage et la rigidité de l'ensemble de la structure métallique 5.

La structure métallique 5 est en appui sur le fond de puits de cuve 2a, par l'intermédiaire des extrémités inférieures des colonnes 8, de sorte que la structure 5 repose de manière extrêmement stable sur le fond de puits de cuve 2a.

Le puits de cuve 2 est rempli d'eau jusqu'à un niveau 12 situé au-dessus du niveau supérieur de la structure métallique 5.

La structure métallique 5 est fixée à l'intérieur du puits de cuve 2 par des ancrages tels que 13 soudés sur la partie extérieure de la structure 5 et scellés dans le béton de la paroi 1 du puits de cuve 2.

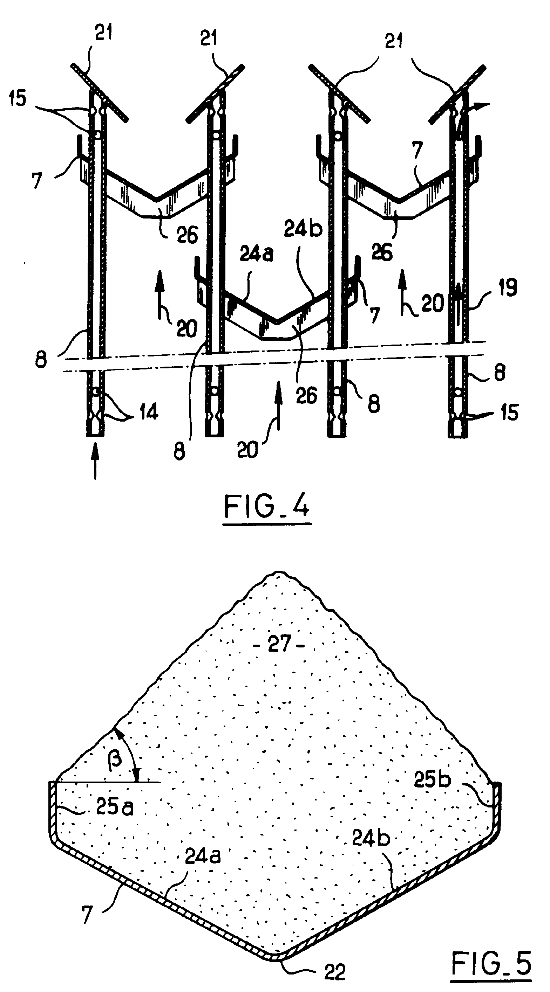

Comme il est visible sur la figure 4, les éléments profilés 7 des rangées successives disposées en quinconce sont assemblés entre eux et maintenus en place par des colonnes tubulaires 8 traversant la paroi des faces inclinées des éléments profilés 7 et assemblées par soudure sur ces parois.

Les colonnes 8 comportent deux paires d'ouvertures traversantes 14 et 15 à leur partie inférieure et à leur partie supérieure respectivement. Les deux paires d'ouvertures sont décalées suivant la hauteur de la colonne 8 et disposées à 90° l'une de l'autre, de manière à favoriser la circulation d'eau dans la colonne 8.

La structure 5 est en effet immergée dans une masse d'eau remplissant le fond du puits de cuve du réacteur et en cas d'accident se traduisant par une fusion du coeur et un déversement du corium sur la structure, l'eau vaporisée au contact du corium est remplacé par de l'eau introduite par une tuyauterie 18 débouchant dans le puits de cuve (figure 1).

L'eau de refroidissement remplissant le fond du puits de cuve circule, pendant le refroidissement du corium, dans la direction verticale aussi bien à l'extérieur des colonnes 8 (flèches 20) qu'à l'intérieur des colonnes de support 8 (flèches 19).

On obtient ainsi un refroidissement efficace de toute la structure métallique 5 et du corium déversé sur cette structure.

Des plaques déflectrices de protection 21 sont fixées à l'extrémité supérieure des colonnes de support 8, dans des positions inclinées, afin d'empêcher un déversement de corium à l'intérieur des colonnes de support 8 et de diriger le corium en fusion vers la surface intérieure des éléments profilés 7 en forme de gouttière.

Sur la figure 5, on voit un élément profilé 7 d'une des rangées supérieures 9a à 9d de la structure métallique 5. Cet élément profilé 7 est constitué par une tôle de forme rectangulaire pliée suivant sa médiane pour constituer l'arête inférieure 22 de l'élément profilé en forme de gouttière. L'élément profilé 7 comporte deux faces inclinées 24a et 24b constituant un dièdre dont l'angle est voisin de 120°.

De plus, les faces 24a et 24b sont pliées dans la direction verticale au voisinage de leur bord externe pour constituer deux bords relevés 25a et 25b permettant d'augmenter la capacité de retenue du corium, de l'élément profilé 7 en forme de gouttière.

Comme il est visible sur la figure 4, les éléments profilés 7 en forme de gouttière sont renforcés et raidis par des pièces 26 en forme de V épousant la forme externe de l'élément profilé 7.

Les pièces de renforcement 26 en forme de V sont fixées sur les éléments profilés au niveau des colonnes 8 et permettent de renforcer la liaison entre l'élément profilé 7 et la colonne 8.

Comme il est visible sur la figure 5, les éléments profilés 7 constituent des réceptacles destinés à recueillir le corium 27 susceptible de se déverser sur la structure métallique 5 dans le cas d'un accident se traduisant par la fusion du coeur du réacteur.

Etant donnée la viscosité du corium à sa température de déversement, le corium 27 forme un tas à l'intérieur de l'élément profilé 7 dont l'angle de talus β est voisin de 45°.

Comme indiqué plus haut, et comme il est visible sur la figure 4, les faces inclinées 24a et 24b des éléments profilés 7 disposés suivant des nappes horizontales successives se recouvrent latéralement, de sorte que la partie latérale externe des faces inclinées se trouve à l'aplomb de la partie latérale externe de faces inclinées des éléments profilés situés dans les autres nappes de la structure métallique 5.

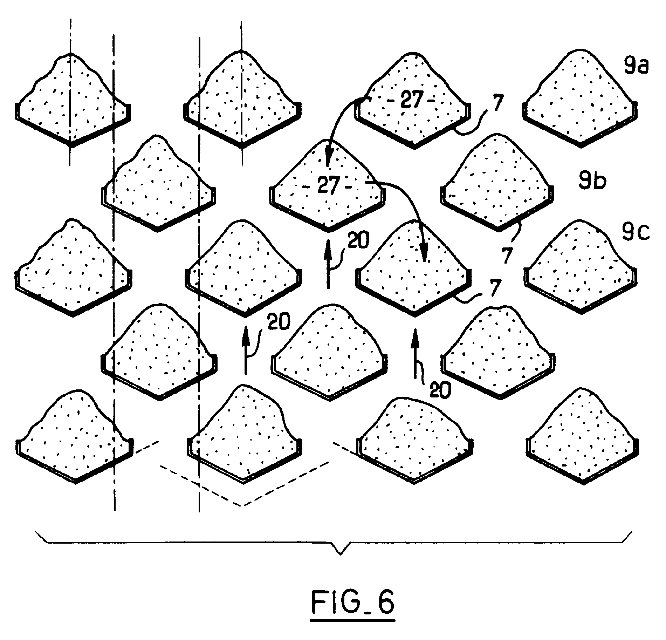

De cette manière, lorsque du corium se déverse sur la partie supérieure de la structure métallique 5 à l'intérieur du puits de cuve, ce corium est dirigé par les déflecteurs 21 à l'intérieur des éléments profilés 7 en forme de gouttières de la nappe supérieure 9a, puis le corium se déverse à partir des éléments profilés 7 de la première nappe 9a vers les éléments profilés de la seconde nappe 9b puis dans les autres nappes inférieures successivement pour remplir l'ensemble des éléments profilés de la structure, comme il est visible sur la figure 6 qui montre que la disposition en quinconce avec recouvrement des éléments profilés 7 permet leur remplissage successif par le corium et la retenue de toute la masse du corium qui ne peut atteindre le fond du puits de cuve.

En effet, la capacité totale de retenue du corium par les éléments profilés 7 est calculée et fixée à une valeur supérieure à la masse totale du corium pouvant se déverser dans le puits de cuve.

Le corium à très haute température retenu par les éléments profilés 7, comme représenté sur la figure 6, est refroidi par l'eau remplissant le fond du puits de cuve qui s'évapore et qui est remplacée par de l'eau introduite dans le fond du puits de cuve par la canalisation 18.

L'eau circule ainsi dans la direction verticale (flèches 20 sur les figures 4 et 6) en venant en contact avec les faces inférieures inclinées 24a et 24b des éléments 7. L'eau s'échauffe et se vaporise, la vapeur est évacuée par la partie supérieure du puits de cuve et de l'eau de remplacement est injectée par la partie inférieure du puits de cuve. Il en résulte une circulation intense et rapide d'eau au contact des éléments profilés 7 de la structure métallique 5. En outre, l'eau assure également le refroidissement des colonnes de support 8 de la structure, comme il a été indiqué plus haut.

La protection du réacteur nucléaire est donc assurée de manière efficace, dans la mesure où le corium ne peut pas venir en contact avec le fond du puits de cuve et se trouve entièrement retenu par la structure métallique 5, le refroidissement et la solidification du corium étant assurés par une circulation intense d'eau au contact des éléments profilés de retenue du corium.

L'invention ne se limite pas au mode de réalisation qui a été décrit.

C'est ainsi que les éléments profilés et les supports verticaux de ces éléments profilés peuvent avoir des formes et des dispositions différentes de celles qui ont été décrites.

La structure métallique peut comporter un nombre quelconque de nappes horizontales superposées d'éléments métalliques, cette structure devant comporter au minimum deux nappes permettant d'assurer le recouvrement complet de la section du puits de cuve.

Enfin, l'invention s'applique à tout réacteur nucléaire comportant une cuve contenant le coeur du réacteur disposée à l'intérieur d'un puits de cuve.

## Revendications

1. Réacteur nucléaire comportant une cuve (3) de forme cylindrique renfermant le coeur du réacteur, un puits de cuve cylindrique (2) dans lequel est disposée la cuve (3) avec son axe vertical, le puits ayant un fond inférieur (2a) situé à l'aplomb de la cuve (3) et un dispositif de récupération et de refroidissement du coeur du réacteur en fusion à la suite d'un accident constitué par une structure métallique (5) reposant sur le fond du puits de cuve (2a) et immergée dans une masse d'eau remplissant la partie inférieure du puits de cuve (2), la structure métallique (5) étant constituée par :
- une pluralité d'éléments 7 allongés et profilés à profil creux ayant deux faces inclinées (24a, 24b) et une section transversale en forme de V, placés parallèlement les uns aux autres avec un certain espacement latéral, suivant au moins deux nappes horizontales (9a, 9b, 9c, 9d, 9e, 9f) superposées, les sections transversales en forme de V des éléments profilés étant évasées et ouvertes vers le haut et les bords externes des faces inclinées (24a, 24b) des éléments profilés disposés en quinconce suivant les rangées superposées se recouvrant latéralement, et
- des supports (8) sensiblement verticaux sur lesquels sont fixés les éléments (7).

2. Réacteur nucléaire suivant la revendication 1, caractérisé par le fait que les supports verticaux (8) des éléments profilés (7) sont constitués par des colonnes tubulaires comportant des ouvertures traversantes (14, 15) dans leur partie inférieure et dans leur partie supérieure, chacune des colonnes (8) traversant les faces inclinées (24a, 24b) d'éléments profilés (7) disposés suivant des nappes horizontales successives.

3. Réacteur nucléaire suivant la revendication 2, caractérisé par le fait que la structure métallique (5) repose sur le fond du puits de cuve (2a) par l'intermédiaire des extrémités inférieures des colonnes de support (8).

4. Réacteur nucléaire suivant la revendication 2, caractérisé par le fait que des plaques déflectrices (21) sont fixées sur la partie d'extrémité supérieure des colonnes de support tubulaires (8).

5. Réacteur nucléaire suivant l'une quelconque des revendications 1 à 4, caractérisé par le fait que les éléments profilés (7) sont constitués par une tôle pliée suivant sa médiane pour constituer l'arête inférieure (22) de l'élément profilé en forme de V et les faces inclinées (24a, 24b).

6. Réacteur nucléaire suivant la revendication 5, caractérisé par le fait que les faces inclinées (24a, 24b) et une partie au moins des éléments profilés (7) sont pliés suivant leur bord latéral externe pour constituer deux bords relevés dans la direction verticale (25a, 25b).

7. Réacteur nucléaire suivant l'une quelconque des revendications 1 à 6, caractérisé par le fait que les éléments profilés (7) en forme de V comportent de plus des pièces de renforcement (26) épousant la forme de la surface externe des éléments profilés et assurant le renforcement des faces inclinées et la fixation des éléments profilés (7) sur les supports verticaux (8).

8. Réacteur nucléaire suivant l'une quelconque des revendications 1 à 7, caractérisé par le fait que les faces inclinées (24a, 24b) des éléments profilés (7) font entre elles un angle dièdre d'une amplitude voisine de 120°.

9. Réacteur nucléaire suivant l'une quelconque des revendications 1 à 8, caractérisé par le fait que la structure métallique (5) comporte des pièces d'ancrage (13) dans la paroi (1) du puits de cuve (2).

10. Réacteur nucléaire suivant l'une quelconque des revendications 1 à 9, caractérisé par le fait qu'il comporte de plus un déflecteur de forme annulaire (6) constitué par une tôle pliée fixée sur la paroi intérieure du puits de cuve (2), au-dessus de la structure métallique (5).

11. Réacteur nucléaire suivant l'une quelconque des revendications 1 à 10, caractérisé par le fait qu'il comporte une canalisation (18) d'alimentation en eau de refroidissement débouchant au voisinage du fond (2a) du puits de cuve (2).

## Patentansprüche

1. Kernreaktor mit einem zylinderförmigen Behälter (3), der den Reaktorkern umschließt, einem zylinderförmigen Behälterschacht (2), in dem der Behälter mit seiner Achse vertikal orientiert angeordnet ist, wobei der Schacht einen unteren Boden (2a) aufweist, der senkrkecht unterhalb des Behälters (3) angeordnet ist und eine Vorrichtung zur Aufnahme und Abkühlung des infolge eines Unfalls schmelzenden Reaktorkerns, bestehend aus einen Metallaufbau (5), der auf dem Boden des Schachtes des Behälters (2a) ruht und in eine Wassermasse eingetaucht ist, die den unteren Teil des Schachtes des Behalters (2) auffüllt, wobei der Metallaufbau (5) besteht aus:
- einer Mehrzahl länglicher profilierter Elemente (7) mit einem Hohlprofil, welches zwei gegeneinander geneigte Flächen (24a, 24b) und einen v-förmigen Querschnitt aufweist, wobei die Elemente parallel zueinander und mit einem bestimmten seitlichen Abstand zueinander in mindestens zwei horizontalen Schichten (9a, 9b, 9c, 9d, 9e, 9f) übereinander angeordnet sind, wobei die V-förmigen Querschnitte der Profilelemente nach oben aufgeweitet und geöffnet sind und die äußeren Ränder der geneigten Flächen (24a, 24b) der Profilelemente versetzt in den übereinander angeordneten Reihen angeordnet sind und sich seitlich überlappen, und
- im wesentlichen senkrechten Trägern (8), auf denen die Elemente (7) befestigt sind.

2. Kernreaktor nach Anspruch 1, dadurch qekennzeichnet, daß die vertikalen Träger (8) der Profilelemente (7) aus rohrförmigen Säulen bestehen, die Durchgangsöffnungen (14, 15) in ihrem unteren Bereich und ihrem oberen Bereich aufweisen,
wobei jede der Säulen (8) die geneigten Seiten (24a, 24b) der Profilelemente (7) kreuzen, die in aufeinanderfolgenden horizontalen Schichten angeordnet sind.

3. Kernreaktor nach Anspruch 2, dadurch gekennzeichnet, daß der Metallaufbau (5) mit den unteren Enden der Trägersäulen (8) auf dem Boden des Behälterschachtes (2a) ruht.

4. Kernreaktor nach Anspruch 2, dadurch gekennzeichnet, daß Ableitplatten (21) auf den oberen Enden der rohrförmigen Trägersäulen (8) angebracht sind.

5. Kernreaktor nach einem der Ansprüche 1 bis 4, dadurch gekennzeichnet, daß die Profilelemente (7) aus einem Blech bestehen, welches in seiner Mitte gefaltet ist, um eine untere Kante (22) des V-förmigen Profilelements und die geneigten Seiten (24a, 24b) zu bilden.

6. Kernreaktor nach Anspruch 5, dadurch gekennzeichnet, daß die geneigten Seiten (24a, 24b) und mindestens ein Teil der Profilelemente (7) entlang ihrer äußeren Ränder gefaltet sind, um zwei in senkrechter Richtung angehobene Ränder (25a, 25b) zu bilden.

7. Kernreaktor nach einem der Ansprüche 1 bis 6, dadurch gekennzeichnet, daß die Profilelemente (7) in V-Form außerdem Verstärkungsteile (26) aufweisen, die die Form der äußeren Oberfläche der Profilelemente annehmen und die Verstärkung der geneigten Seiten und die Befestigung der Profilelemente (7) auf den senkrechten Trägern (8) gewährleisten.

8. Kernreaktor nach einem der Ansprüche 1 bis 7, dadurch gekennzeichnet, daß die geneigten Seiten (24a, 24b) der Profilelemente (7) untereinander einen Flächenwinkel mit einem Wert von ungefähr 120° einnehmen.

9. Kernreaktor nach einem der Ansprüche 1 bis 8, dadurch gekennzeichnet, daß der Metallaufbau (5) ein Verankerungsteil (13) in der Wandung (1) des Behälterschachts (2) aufweist.

10. Kernreaktor nach einem der Ansprüche 1 bis 9, gekennzeichnet durch einen ringförmigen Umlenker (6), der aus einem gefalteten Blech besteht, welches auf der Innenwand des Behälterschachts (2) oberhalb des Metallaufbaus (5) angeordnet ist.

11. Kernreaktor nach einem der Ansprüche 1 bis 10, gekennzeichnet durch eine Kühlwasserzufuhrkanalisation (18), die in der Nähe des Bodens (2a) des Behälterschachts (2) im Schacht mündet.

## Claims

1. Nuclear reactor comprising a vat (3) of cylindrical shape enclosing the reactor core, a cylindrical vat well (2) in which is disposed the vat (3) with its vertical axis, the well having a lower base (2a) situated straight below the vat (3) and a device for catching and cooling the molten reactor core caused by an accident, constituted by a metal structure (5) resting on the base (2a) of the vat well and immersed in a mass of water filling the lower part of the vat well (2), the metal structure (5) being constituted by:
- a plurality of elongated and profiled members (7) with a hollow profile having two inclined faces (24a, 24b) and a v-shaped cross-section, placed parallel to each other with a certain lateral spacing, in at least two superimposed horizontal layers (9a, 9b, 9c, 9d, 9e, 9f), the V-shaped cross-sections of the profiled members being flared and open in an upwards direction and the outer edges of the inclined faces (24a, 24b) of the profiled members being staggered in superimposed rows overlapping laterally, and,
- substantially vertical supports (8) on which the members (7) are fixed.

2. Nuclear reactor according to Claim 1, characterised by the fact that the vertical supports (8) for the profiled members (7) are constituted by tubular columns comprising penetrating openings (14, 15) in their lower part and in their upper part, each of the columns (8) penetrating the inclined faces (24a, 24b) of the profiled members (7) arranged in successive horizontal layers.

3. Nuclear reactor according to Claim 2, characterised by the fact that the metal structure (5) rests on the base (2a) of the vat well through the intermediary of the lower ends of the support columns (8).

4. Nuclear reactor according to Claim 2, characterised by the fact that deflecting plates (21) are fixed on the upper end part of the tubular support columns (8).

5. Nuclear reactor according to one of Claims 1 to 4, characterised by the fact that the profiled members (7) are constituted by a metal plate bent along its median in order to constitute the lower edge (22) of the V-shaped profiled member and the inclined faces (24a, 24b).

6. Nuclear reactor according to Claim 5, characterised by the fact that the inclined faces (24a, 24b) and at least one part of the profiled members (7 ) are bent along their outer side edge in order to constitute two edges (25a, 25b) rising in the vertical direction.

7. Nuclear reactor according to one of Claims 1 to 6, characterised by the fact that the V-shaped profiled members (7) additionally comprise reinforcing memners (26) following the shape of the outer surface of the profiled members and ensuring the reinforcement of the inclined faces and the fixing of the profiled members (7) to the vertical supports (8).

8. Nuclear reactor according to one of Claims 1 to 7, characterised by the fact that the inclined faces (24a, 24b) of the profiled members (7) between them form a dihedral angle having an amplitude close to 120.

9. Nuclear reactor according to one of Claims 1 to 8, characterised by the fact that the metal structure (5) comprises members (13) for anchoring in the wall (1) of the vat well (2).

10. Nuclear reactor according to one of Claims 1 to 9, characterised by the fact that it additionally comprises a deflector (6) of annular shape constituted by a bent metal plate fixed to the inner wall of the vat well (2), above the metal structure (5).

11. Nuclear reactor according to one of Claims 1 to 10, characterised by the fact that it comprises a pipe (18) for supplying cooling water opening out in the vicinity of the base (2a) of the vat well (2).
